# EUROPÄISCHE PATENTANMELDUNG

(11) **EP 1 304 300 A2**
(43) Veröffentlichungstag der Anmeldung: **23.04.2003**
(21) Anmeldenummer: 02022056.2
(22) Anmeldetag: 02.10.2002
(51) Int. Cl.: B65D 85/50

(54) **Dekorationspapier**

(30) Priorität: 10.10.2001 DE 20116586 U
(71) Anmelder: Behnisch, Peter, 86165 Augsburg (DE)
(72) Erfinder: Behnisch, Peter, 86165 Augsburg (DE)
(74) Vertreter: Rapp, Bertram, Dr.

(57) **Zusammenfassung**

Die Erfindung ein Dekorationspapier zum Verpacken von Blumensträußen (7), wobei das Dekorationspapier entlang einer Seitenkante (5), welche die Stiele eines Blumenstraußes (7) umgreift, gerafft wird, und ein Streifen (5 - 15) des Dekorationspapiers, welcher von dieser Seitenkante (5) und einer hierzu parallelen Linie (15) begrenzt wird mit einem Dünge- oder Frischhaltemittel für den Blumenstrauß (7) getränkt oder mindestens auf einer Seite mit einem Düngemittel beschichtet ist. Bei einem derartigen Dekorationspapier kann ein Frischhalten des Blumenstraußes in einer Vase ermöglicht werden, indem die Linie (15) von einer Perforation gebildet ist, welche zum Abtrennen des Streifens (5-15) dient. Mittels dieser Perforation kann der mit einem Dünge- oder Frischhaltemittel getränkte oder beschichtete Streifen abgetrennt und in das Blumenwasser eingebracht werden.

## Beschreibung

Die Erfindung betrifft ein Dekorationspapier zum Verpacken von Blumensträußen nach dem Oberbegriff des Anspruchs 1 sowie ein Dekorationspapier zur Herstellung von Ziermanschetten für Blumensträuße nach dem Oberbegriff von Anspruch 8.

Derartige Dekorationspapiere werden üblicherweise von Floristen zum Verpacken von Blumensträußen benutzt, wobei das Dekorationspapier häufig in Bögen geeigneter Größe vorkonfektioniert oder auch in Form einer Endlosrolle aufgerollt ist, welche in eine Abrollvorrichtung eingelegt werden kann. Der Florist nimmt den vorkonfektionierten Bogen oder trennt ein Teilstück eines Dekorationspapiers von der Rolle ab und verpackt den Blumenstrauß, indem er das Dekorationspapier entlang einer seiner Seitenkanten zusammenrafft und den zusammengerafften Teil um die Stiele des Blumenstraußes legt, so daß der nicht geraffte Teil den Blumenstrauß im Bereich seiner Blüten umgibt und dadurch einhüllt. Auf diese Art kann der Florist eine dekorative und für den Transport stabile Verpackung des Blumenstraußes herstellen.

Ein Dekorationspapier nach dem Oberbegriff von Anspruch 1 ist aus der DE 199 09 448 A1 bekannt. Dieses Dekorationspapier weist einen von einer Seitenkante begrenzten Streifen auf, der mit einem Düngemittel für den Blumenstrauß beschichtet ist. Wird ein mit einem derartigen Dekorationspapier umwickelter Blumenstrauß zusammen mit dem Papier in eine mit Wasser gefüllte Vase gestellt, so löst sich die Düngemittel-Beschichtung des Papiers im Wasser auf und hält den Blumenstrauß dadurch frisch. Hierfür muß jedoch das Dekorationspapier am Blumenstrauß verbleiben und der Strauß zusammen mit dem umwickelten Papier in die Vase gestellt werden.

Dies erweist sich insbesondere dann als nachteilig, wenn das Dekorationspapier den Blumenstrauß vollständig einhüllt, so daß die Blüten des Straußes nicht mehr sichtbar sind. Um die Blüten des Straußes sichtbar zu machen, wird deshalb in der Regel das Dekorationspapier vom Blumenstrauß entfernt, bevor dieser in die Vase gestellt wird. Ein Frischhalten des Blumenstraußes durch Hinzugabe von Düngemittel ist dann nur möglich, indem ein flüssiges oder pulverförmiges Düngemittel oder ein mit Dünger beschichtetes Blättchen in das Blumenwasser gegeben wird. Dies erweist sich jedoch als sehr umständlich.

Der Erfindung liegt damit die Aufgabe zugrunde, ein gattungsgemäßes Dekorationspapier so weiterzubilden, daß es sowohl einen dekorativen Schutz für den Blumenstrauß beim Transport bietet als auch ein Frischhalten des Blumenstraußes in der Vase ermöglicht, wobei die Blüten des in der Vase befindlichen Blumenstraußes möglichst gut sichtbar sein sollten.

Gelöst wird diese Aufgabe mit den kennzeichnenden Merkmalen der Ansprüche 1 und 8. Vorteilhafte Ausgestaltungen sind den Unteransprüchen zu entnehmen.

Ausführungsbeispiele der Erfindung werden im folgenden unter Bezugnahme auf die begleitenden Zeichnungen näher beschrieben. Die Zeichnungen zeigen:
- **Figur 1:**: Ein als Rolle aufgewickeltes Dekorationspapier, gelagert in einer Abrollvorrichtung;
- **Figur 2:**: Eine bevorzugte Ausführungsform des als Rolle gewickelten Dekorationspapiers von Figur 1;
- **Figur 3:**: Ein von der Rolle nach Figur 2 abgerissenes Teilstück des Dekorationspapiers, welches zum Verpacken eines Blumenstraußes dient;
- **Figur 4:**: Ein mit dem Dekorationspapier verpackter Blumenstrauß;
- **Figur 5:**: Der Blumenstrauß von Figur 4, eingestellt in eine mit Wasser gefüllte Vase;
- **Figur 6:**: Eine bevorzugte Ausführungsform eines als Rolle gewickelten Dekorationspapiers zur Herstellung von Ziermanschetten für Blumensträuße.

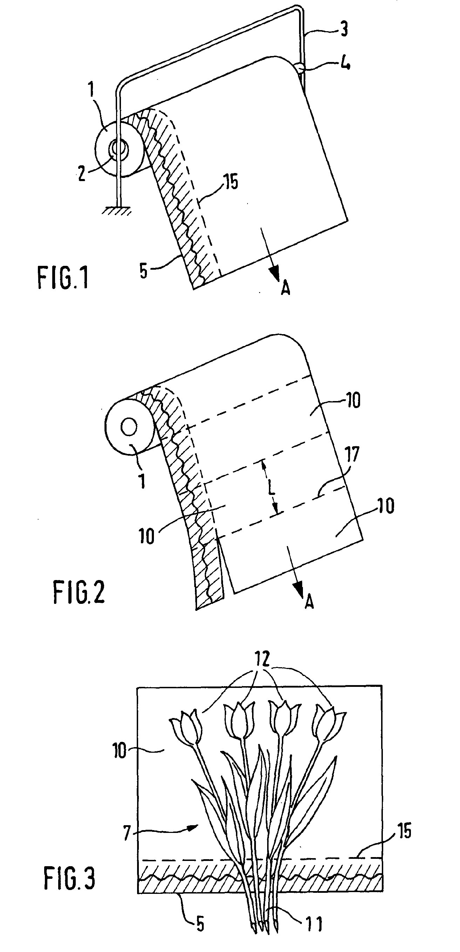

In Figur 1 ist ein Dekorationspapier dargestellt, welches als Endlosrolle 1, d. h. als Rolle beliebiger Länge, aufgewickelt ist. Die Rolle 1 ist um eine Hülse 2 gewickelt und in einer Abrollvorrichtung 3 gelagert, indem der Querstab 4 der Abrollvorrichtung durch die Hülse 2 geschoben ist. Dadurch können Teilstücke des Dekorationspapiers von der Rolle 1 abgezogen und anschließend in gewünschter Länge abgeschnitten oder abgerissen werden. Das Abreißen eines Teilstückes mit einer zur Verpackung eines einzelnen Blumenstraußes geeigneten Länge erfolgt üblicherweise über eine Schneidkante.

Das Dekorationspapier von Figur 1 weist in seiner Längsrichtung, d. h. in Abzugsrichtung A der Rolle, einen von einer Seitenkante 5 des Dekorationspapiers und einer hierzu parallel verlaufenden Linie 15 begrenzten Streifen 5-15 auf. Dieser Streifen 5-15 ist mit einem flüssigen Düngemittel für Blumensträuße getränkt. Alternativ kann der Streifen 5-15 auch mit einem pulvrigen oder granulatförmigen Düngemittel einseitig oder beidseitig beschichtet sein. Die zur Seitenkante 5 parallele Linie 15 ist durch einen Perforation gebildet. Durch diese Perforation 15 kann der Streifen 5-15 vom übrigen Teil des Dekorationspapiers leicht mit der Hand ohne Zuhilfenahme von Schneidmitteln abgetrennt werden.

Das Tränken des Dekorationspapiers mit einem Flüssigdünger bzw. die Beschichtung mit einer Düngemittelsubstanz erfolgt üblicherweise während des Konfektioniervorgangs des Papiers, entweder durch Besprühen oder durch Bedrucken.

In der in Figur 2 dargestellten Ausführungsform weist das Dekorationspapier längs zur Abzugsrichtung A in regelmäßigen Abständen L Querperforationen 17 auf, welche sich quer zur Abzugsrichtung A erstrecken. Mittels dieser Querperforationen 17 lassen sich Teilstücke 10 mit einer zum Verpacken eines einzelnen Blumenstraußes geeigneten Länge L auf einfache Art und ohne Hilfsmittel von der Rolle 1 manuell abtrennen.

In Figur 3 ist die Verwendung eines von der Rolle 1 abgetrennten Teilstücks eines Dekorationspapiers (Dekorationspapierbogen 10) zum Verpacken eines Blumenstraußes 7 dargestellt. Der Dekorationspapierbogen 10 wird dabei so um den Blumenstrauß 7 gelegt, daß sich der Streifen 5-15 quer zu den Stielen 11 des Blumenstraußes 7 erstreckt. Zum Verpacken des Blumenstraußes wird der Dekorationspapierbogen 10 entlang der Seitenkante 5 von Hand zusammengerafft und um den Blumenstrauß 7 herumgelegt, so daß der obere Teil, d.h. der nicht geraffte Teil des Dekorationspapierbogens 10 die Blüten 12 des Blumenstraußes 7 einhüllt.

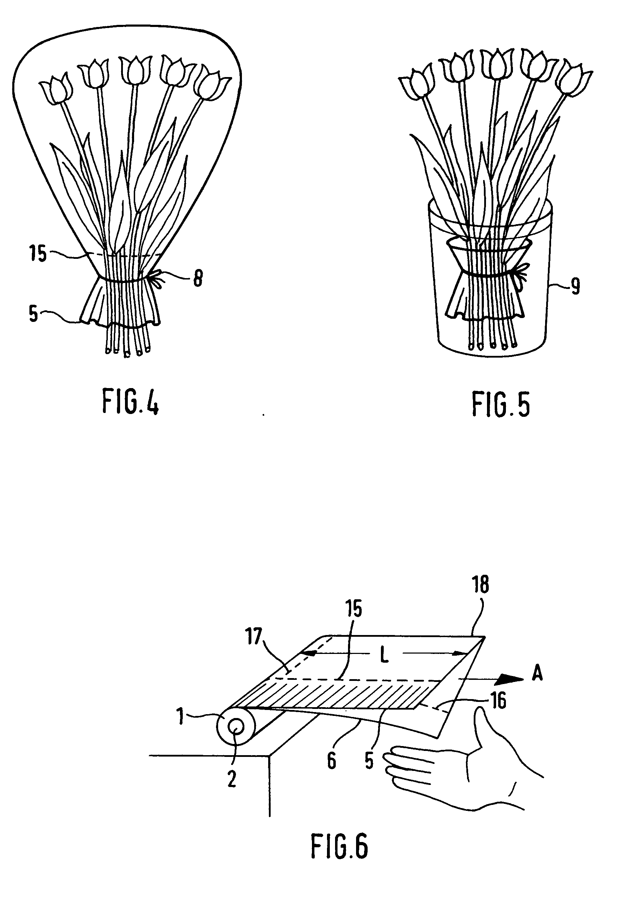

Schließlich wird, wie in Figur 4 dargestellt, um das Dekorationspapier im Bereich der Stiele 11 ein Bindemittel 8, beispielsweise eine Kordel oder eine Hanfschnur gebunden und verknotet, um eine feste Verbindung des Dekorationspapierbogens 10 mit dem Blumenstrauß 7 zu gewährleisten. Die Breite des Dekorationspapierbogens 10 ist zweckmäßig der Größe des Blumenstraußes 7 so angepaßt, daß der Blumenstrauß entweder vollständig von dem Dekorationspapierbogen 10 eingehüllt ist oder der oberste Bereich der Blüten 12 sichtbar bleibt. Diese dekorative Verpackung verleiht dem Blumenstrauß 7 beim Transport einen ausreichenden Schutz.

Bevor der verpackte Blumenstrauß in eine mit Wasser gefüllte Vase gestellt wird, kann der obere Teil des Dekorationspapierbogens 10, also der sich im Bereich der Blüten 12 befindliche Teil, mittels der Perforation 15 vom unteren Teil, also dem mit dem Düngemittel versehenen Streifen 5-15, abgetrennt werden. Der Streifen 5-15 verbleibt aufgrund der festen Verbindung mit dem Bindemittel 8 im Bereich der Stiele 11 am Blumenstrauß 7. So wird der Blumenstrauß 7 in die mit Wasser gefüllte Vase 9 gestellt (Figur 5). Der mit dem Düngemittel versehene Streifen 5-15 des Dekorationspapiers befindet sich dadurch zumindest teilweise im Wasser. Dadurch wird das Düngemittel langsam in das Wasser abgegeben, wodurch eine ausreichende und lang andauernde Versorgung des Blumenwassers mit Nährstoffen für die Blumen gewährleistet ist.

In einer bevorzugten Ausführungsform ist das Dekorationspapier - wie in Figur 6 dargestelltals Rolle 1 gewickelt und entlang einer in Abzugsrichtung A verlaufenden Falzkante 18 gefaltet und damit auf der Rolle 1 doppelt gelegt, wodurch zwei Seitenkanten 5 und 6 übereinander liegen. Beide Lagen des doppelt gelegten Dekorationspapiers weisen einen jeweils von einer Seitenkante 5, 6 und einer hierzu parallelen Linie 15, 16 begrenzten Streifen 5-15, 6-16 auf, wobei dieser Streifen 5-15, 6-16 jeweils mit einem Düngemittel getränkt oder beschichtet ist und die Linien 15 und 16 jeweils als Perforation zum Abtrennen der Streifen 5-15 und 6-16 ausgebildet sind. Der mit Düngemittel versehene Streifen 5-15 kann auch nur auf einer Lage des Dekorationspapiers nach Figur 6 vorgesehen sein. Bevorzugt weist das auf der Rolle doppelt gelegte Dekorationspapier gemäß Figur 6 längs zur Abzugsrichtung A in regelmäßigen Abständen L Querperforationen 17 auf, mittels derer Teilstücke mit zum Verpacken eines einzelnen Blumenstraußes geeigneter Länge L von der Rolle 1 abgetrennt werden können.

Das auf der Rolle 1 doppelt gelegte Dekorationspapier gemäß Figur 6 erweist sich als besonders geeignet zur Herstellung von stabilen Ziermanschetten für Blumensträuße. Hierzu wird ein Teilstück geeigneter Länge L von der Rolle 1 abgezogen und mittels der Querperforation 17 abgetrennt und anschließend wie in Figur 3 dargestellt um den Blumenstrauß gelegt. Das anschließend durchzuführende Verfahren zur Bildung einer stabilen Ziermanschette ist im einzelnen in der DE 199 09 448 A1 beschrieben.

In einem bevorzugten Ausführungsbeispiel eines auf der Rolle 1 doppelt gelegten Dekorationspapiers gemäß Figur 6 ist jeder Querperforation 17 ein Klebstreifen zugeordnet, welcher in Abzugsrichtung A jeweils unmittelbar vor oder hinter dieser Querperforation 17 auf der Innenseite einer Lage des doppelt gelegten Papiers angeordnet ist. Durch diesen Klebstreifen werden die Innenseiten der beiden Lagen des doppelt gelegten Papiers streifenförmig zusammengeklebt, so daß sich nach dem Abtrennen eines Teilstücks der Länge L von der Rolle 1 eine an zwei Seitenkanten offene Tüte ergibt, wobei eine offene Seitenkante 5 diejenige ist, welche den mit Dünger versehenen Streifen 5-15 begrenzt. In diese so gebildete Tüte wird der Blumenstrauß eingelegt, wobei die Stiele 11 des Straußes in der Ecke liegen, welche durch die Querperforationslinie 17 und die Falzkante 18 gebildet ist. Zur Befestigung der Tüte am Blumenstrauß wird wiederum ein Bindemittel 18 im Bereich der Stiele um den in die Tüte eingelegten Blumenstrauß gebunden. Der Benutzer packt den Blumenstrauß dann nach erfolgtem Transport aus der Tüte aus und stellt ihn in die mit Wasser gefüllte Vase 9. Zum Frischhalten des Blumenstraußes reist der Benutzer den oder die Streifen 5-15, 6-16 von der Verpackungstüte ab und gibt den abgerissenen, mit Düngemittel versehenen Teil in das Blumenwasser.

Das erfindungsgemäße Dekorationspapier ist nicht auf die in den Figuren 1, 2 und 6 dargestellte Ausführungsform beschränkt, in welcher das Dekorationspapier als Rolle 1 gewickelt ist. Es kann vielmehr auch in Bögen 10 vorkonfektioniert sein, welche in ihrer Größe den Abmessungen typischer Blumensträuße angepaßt sind. Das Dekorationspapier kann einfarbig oder gemustert sein und weist in der Regel ein Flächengewicht von etwa 30 g/m² auf.

Die als Düngemittel bezeichnete Substanz, mit welcher der Streifen 5-15 bzw. 6-16 des erfindungsgemäßen Dekorationspapiers versehen ist, soll geeignet sein die Lebensdauer von Schnittblumen zu verlängern, indem entweder das Bakterienwachstum im Blumenwasser verhindert oder das Blumenwasser gereinigt wird oder indem den Blumen Nährstoffe, wie beispielsweise Glukose, Sakkarose, Harnstoff und Kaliumsalze zugeführt werden.

## Patentansprüche

1. Dekorationspapier zum Verpacken von Blumensträußen (7), wobei das Dekorationspapier entlang einer Seitenkante (5), welche die Stiele eines Blumenstraußes (7) umgreift, gerafft wird, und ein Streifen (5 - 15) des Dekorationspapiers, welcher von dieser Seitenkante (5) und einer hierzu parallelen Linie (15) begrenzt wird mit einem Dünge- oder Frischhaltemittel für den Blumenstrauß (7) getränkt oder mindestens auf einer Seite mit einem Düngemittel beschichtet ist, **dadurch gekennzeichnet, daß** die Linie (15) von einer Perforation gebildet ist, welche zum Abtrennen des Streifens (5-15) dient.

2. Dekorationspapier nach Anspruch 1, **dadurch gekennzeichnet, daß** sich der Streifen (5-15) quer zu den Stielen des Blumenstraußes (7) erstreckt.

3. Dekorationspapier nach Anspruch 1 oder Anspruch 2, **dadurch gekennzeichnet, daß** das Dekorationspapier als Endlosrolle (1) gewickelt und entlang einer Abzugsrichtung (A) von dieser Rolle (1) abziehbar ist, wobei die Linie (15) längs der Abzugsrichtung (A) verläuft.

4. Dekorationspapier nach einem der Ansprüche 1 bis 3, **dadurch gekennzeichnet, daß** der Streifen (5 - 15) beidseitig mit dem Düngemittel beschichtet ist.

5. Dekorationspapier nach einem der voranstehenden Ansprüche, **dadurch gekennzeichnet, daß** es doppelt gelegt ist, wodurch zwei Seitenkanten (5, 6) mit je einem zugehörigen Streifen (5 - 15, 6 - 16) übereinander liegen und mindestens die jeweiligen Außenseiten beider Streifen mit dem Düngemittel beschichtet oder getränkt sind.

6. Dekorationspapier nach Anspruch 5, **dadurch gekennzeichnet, daß** auch die einander zugewandten Innenseiten beider Streifen (5 - 15, 6 - 16) mit dem Düngemittel beschichtet oder getränkt sind.

7. Dekorationspapier nach einem der Ansprüche 2 bis 5, **dadurch gekennzeichnet, daß** längs zur Abzugsrichtung (A) in regelmäßigen Abständen (L) jeweils quer zur Abzugsrichtung (A) verlaufende Querperforationen (17) vorgesehen sind, durch welche Teilstücke des Dekorationspapiers mit der Länge (L) nach Abzug von der Rolle (1) abtrennbar sind.

8. Dekorationspapier zur Herstellung von Ziermanschetten für Blumensträuße (7), welches als Rolle (1) gewickelt und entlang einer in Abzugsrichtung (A) verlaufenden Falzkante (18) gefaltet und damit auf der Rolle (1) doppelt gelegt ist, wodurch zwei Seitenkanten (5, 6) übereinander liegen, **dadurch gekennzeichnet, daß** das Dekorationspapier mindestens einen längs der Abzugsrichtung (A) verlaufenden Streifen (5-15, 6-16) aufweist, der von einer Seitenkante (5 oder 6) und einer dazu parallelen Linie (15 oder 16) begrenzt ist und mit einem Dünge- oder Frischhaltemittel für den Blumenstrauß getränkt oder beschichtet ist, wobei die Linie (15, 16) als Perforation zum Abtrennen des Streifens (5-15, 6-16) ausgebildet ist.

9. Dekorationspapier nach Anspruch 8, **dadurch gekennzeichnet, daß** beide Lagen des doppelt gelegten Dekorationspapiers jeweils einen mit dem Düngemittel beschichteten oder getränkten Streifen (5-15, 6-16) aufweisen, der jeweils begrenzt ist durch eine Seitenkante (5, 6) und einen dazu parallelen Streifen (15, 16), der als Perforation ausgebildet ist.

10. Dekorationspapier nach Anspruch 8 oder Anspruch 9, **dadurch gekennzeichnet, daß** längs zur Abzugsrichtung (A) in regelmäßigen Abständen (L) jeweils Querperforationen (17) angebracht sind, mit welchen Teilstücke des Dekorationspapiers nach Abzug von der Rolle (1) abtrennbar sind.

11. Dekorationspapier nach einem der Ansprüche 8 bis 10, **dadurch gekennzeichnet, daß** jeder Querperforation (17) mindestens ein Klebstreifen zugeordnet ist, welcher in Abzugsrichtung (A) jeweils vor jeder Querperforation (17) einseitig oder beidseitig an der Innenseite des doppelt gelegten Papiers angeordnet ist und die beiden Innenseiten streifenförmig zusammenklebt.
